# EUROPÄISCHE PATENTSCHRIFT

(11) **EP 1 059 209 B1**
(45) Veröffentlichungstag und Bekanntmachung des Hinweises auf die Patenterteilung: **26.03.2003**
(21) Anmeldenummer: 00109315.2
(22) Anmeldetag: 29.04.2000
(51) Int. Cl.: B60R 21/16

(54) **Schutzvorrichtung für den Kopf- und Schulterbereich von Fahrzeuginsassen**
Head and shoulder protection device for a vehicle occupant
Dispositif de protection de la tête et de l' épaule d'un occupant de véhicule

(30) Priorität: 10.06.1999 DE 19926269
(43) Veröffentlichungstag der Anmeldung: 13.12.2000
(73) Patentinhaber: DaimlerChrysler AG, 70567 Stuttgart (DE)
(72) Erfinder: Schink, Frank, 72415 Grosselfingen (DE); Tschäschke, Ulrich, 71139 Ehningen (DE)

(56) Entgegenhaltungen:
- EP-A- 0 814 001
- US-A- 3 774 936

## Beschreibung

Die Erfindung betrifft eine Schutzvorrichtung für den Kopf- und Schulterbereich von Fahrzeuginsassen im Falle eines Seitenoder Schrägaufpralls, mit den im Oberbegriff des Anspruches 1 erläuterten Merkmalen.

Eine derartige Schutzvorrichtung ist aus EP 0 814 001 A1 bekannt. Der im seitlichen Dachkantenbereich in zusammengefaltetem Zustand deponierte Airbag erstreckt sich beim Aktivieren vom oberen Dachkantenbereich nach unten und überdeckt dabei, ein Aufprallkissen bildend, den oberen Tür- bzw. Fensterrahmen.

Der Airbag ist, in Fahrtrichtung gesehen, mit seinem vorderen und hinteren Airbagteil in dessen unterem Randbereich über bandartige Verbindungselemente an jeweils einer Säule der Fahrgastzelle verankert. Sofern sich dabei der Airbag bspw. längs der gesamten Fahrzeuginnenseite erstreckt, sind die Verbindungselemente an der A-Säule und C-Säule angelenkt, wobei deren Befestigungspunkt am Airbag bei dessen Befüllung durch einen Gasgenerator einen Kreisbogen um den säulenseitigen Anlenkpunkt der Verbindungselemente beschreibt.

Durch die Anbindung des Airbags an zwei Säulen der Fahrgastzelle wird einerseits eine seitenwandnahe Führung desselben während des Befüllungsvorganges und andererseits durch eingeschnürte Bereiche des Airbags und somit durch eine spezielle Form des Aufprallkissens beim Aufblasen und dem damit verbundenen Verkürzen desselben zwischen den beiden Verankerungspunkten in Längsrichtung des Airbags ein definierter Spannungsverlauf bzw. ein solches Straffen erzielt.

Einer derartigen, im Zusammenwirken mit den Verbindungselementen die Kissenspannung bewirkenden Verkürzung des Aufprallkissens sind jedoch bei langer Abwicklung des Airbags und einer geringeren, bspw. durch den Abstand von A-und B-Säule bedingten Airbaglänge Grenzen gesetzt.

Hier setzt nun die Erfindung ein. Es liegt ihr die Aufgabe zugrunde, eine Schutzvorrichtung der im Oberbegriff des Anspruches 1 erläuterten Art anzugeben, die bei jeder Dimensionierung des Airbag ohne zusätzliche Maßnahmen, wie das spezielle, bereichsweise Einschnüren des Aufprallkissens oder den Einsatz einer pyrotechnischen oder federkraftbetätigten Straffvorrichtung gemäß DE 195 19 297 A1, ein Straffen desselben in aufgeblasenem Zustand sicherstellt.

Diese Aufgabe wird erfindungsgemäß durch die kennzeichnenden Merkmale des Anspruches 1 gelöst.

Durch die erfindungsgemäße Führung eines der Verbindungselemente über ein im seitlichen Dachkantenbereich vorgesehenes, stationäres Umlenkglied sowie um ein am Airbag zwischen beiden Befestigungspunkten des Verbindungselementes angeordnetes Umlenkglied wird erreicht, dass sich beim Entfalten des Airbag während seiner Gasbefüllung nach unten der airbagseitige Befestigungspunkt sowie das am Airbag vorgesehene Umlenkglied sich ebenfalls gemeinsam relativ zum stationären, im seitlichen Dachkantenbereich angeordneten Umlenkglied nach unten verlagern. Hierbei wird das vorzugsweise eine Straffleine bildende Verbindungselement im Verlaufe der Airbagaktivierung gestrafft, wobei durch die Abstützung des sich zwischen stationärem, oberem Umlenkglied und säulenseitigem Verankerungspunkt erstreckenden Leinenteilstückes über das am Airbag befestigte Umlenkglied auf den Airbag eine resultierende Kraft übertragen wird, die versucht, den Airbag in Richtung auf die Säule der Fahrgastzelle zu ziehen, an der dieses Leinenteilstück festgelegt ist.

Daraus resultiert im Zusammenwirken mit dem anderen, am Airbag angreifenden Verbindungselement ein den Airbag momentan an der Innenseitenwand der Fahrgastzelle fixierendes Straffen desselben.

Eine Ausgestaltung der Erfindung nach Anspruch 2 bietet den Vorteil einer optimal wirksamen Airbagspannung.

Eine Ausgestaltung der Erfindung nach Anspruch 3 ermöglicht den Einsatz einer Straffleine kürzester Länge, was in Bezug auf den Platzbedarf für den zusammengefalteten Airbag wesentlich ist.

Der Airbag kann sich zwischen zwei benachbarten Säulen der Fahrgastzelle oder über den zwischen der A-Säule und der C-Säule liegenden Bereich erstrecken, wobei es in jedem Falle günstig ist, das über das obere, stationäre Umlenkglied geführte Verbindungselement an der Fahrgastzelle gemäß Anspruch 4 festzulegen, da dann der Abstand zwischen dem säulenseitigen Befestigungspunkt und dem airbagseitigen Umlenkglied relativ klein bleiben kann.

Sofern der Airbag lediglich zwischen der A-Säule und B-Säule positioniert werden sollte, ergibt sich eine vorteilhafte Konstruktion gemäß Anspruch 5, da in diesem Falle zugleich ein wirksamer Schutz des Kopfes bei einem Aufprall gegen die A-Säule erreicht wird.
In der Zeichnung ist, stark schematisiert, ein mögliches Ausführungsbeispiel der Erfindung dargestellt. Es zeigen:

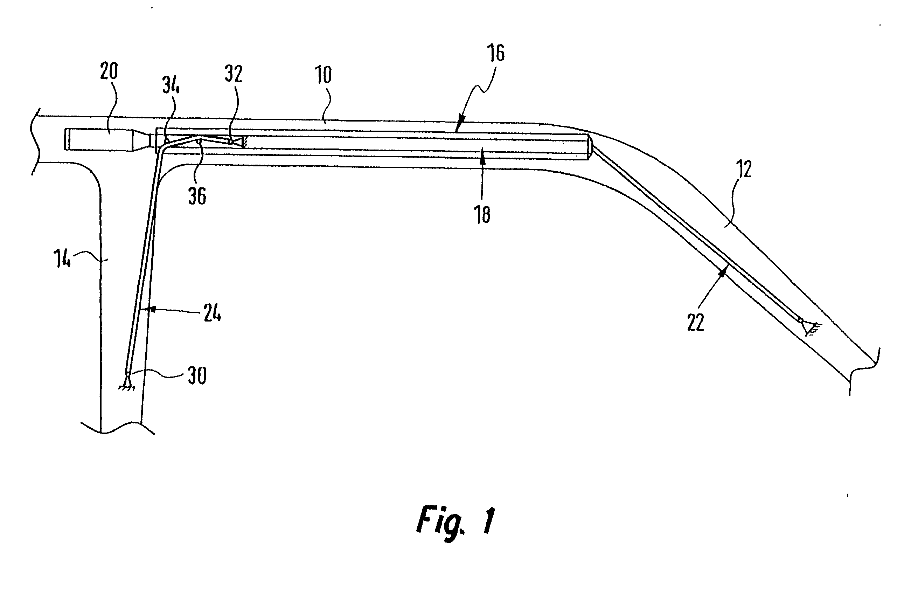

- Figur 1: eine Seitenansicht einer Schutzvorrichtung mit einem in einem seitlichen Dachkantenbereich einer Fahrgastzelle verstauten Airbag;
- Figur 2: eine Darstellung entsprechend Figur 1, wobei der Airbag in aufgeblasenem und seitlich verspanntem Zustand dargestellt ist.

10 bezeichnet einen Abschnitt eines Dachlängsholmes eines Personenkraftwagens, 12 eine sich an diesen anschließende A-Säule und 14 eine B-Säule. Mit 16 ist als Ganzes eine Schutzvorrichtung für den Kopf- und Schulterbereich von Fahrzeuginsassen bezeichnet, die einen sich bspw. von der A-Säule 12 zur B-Säule 14 erstreckenden Seitenairbag 18 aufweist. Dieser könnte sich auch bis zu einer C-Säule oder zwischen dieser und der B-Säule 14 erstrecken.

In nicht aktiviertem Zustand ist der Seitenairbag 18 zusammengefaltet unter einer Verkleidung der A- und B-Säule 12 und 14 sowie des seitlichen Dachlängsholmes 10 versteckt angeordnet. Am Seitenairbag 18 ist in bekannter Weise ein durch einen Sensor auslösbarer und vorzugsweise gleichfalls im Dachlängsholm 10 installierter Gasgenerator 20 angeschlossen.

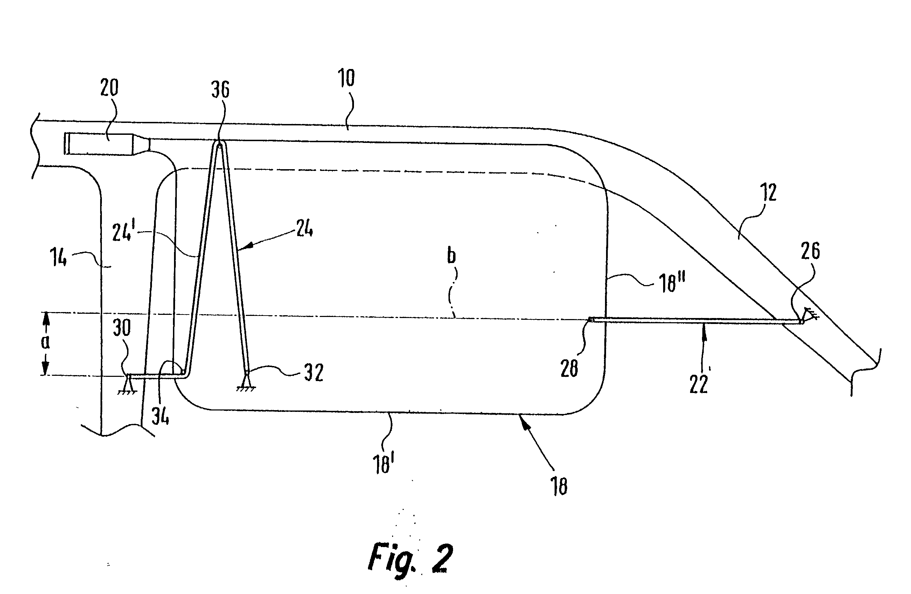

Wie Figur 2 zeigt, ist der Seitenairbag 18 an seinem, in Fahrtrichtung betrachtet, vorderen und hinteren Airbagteil im Bereich seines unteren Randteils 18' mit jeweils einem Verbindungselement 22 bzw. 24 verbunden.

Während das Verbindungselement 22, vorzugsweise in Form einer Fangleine, bei 26 an der A-Säule 12 und bei 28 nahe am vorderen Randteil 18" des Airbags 18 befestigt ist, bildet das Verbindungselement 24 eine den Airbag 18 in gasgefülltem Zustand in der Zeichenebene verspannende Straffleine.

Zu diesem Zweck ist die Straffleine 24 mit ihrem einen Ende vorzugsweise im Abstand a unterhalb einer die Befestigungspunkte 26 und 28 der Fangleine 22 enthaltenden Horizontalebene b an der B-Säule 14 bei 30 und mit ihrem anderen Ende bei 32 im Bereich des unteren Randteils 18' des Airbags 18 befestigt sowie um zwei in der Höhe zueinander versetzte Umlenkglieder 34 und 36 herumgeführt.

Das Umlenkglied 34 ist ungefähr in der Mitte und im Wesentlichen in der gleichen Horizontalebene wie die Befestigungspunkte 30, 32 der Straffleine 24 zwischen diesen am Airbag 18 befestigt, während das Umlenkglied 36 am Dachlängsholm 10 vorzugsweise so positioniert ist, dass es ungefähr in der Mitte zwischen dem airbagseitig vorgesehenen Befestigungspunkt 32 und dem airbagseitigen Umlenkglied 34 liegt.

Selbstverständlich könnte die erläuterte Anordnung der Straffleine 24 auch so getroffen sein, dass deren Befestigungspunkt 30 an der A-Säule 12 vorhanden wäre.

Wie Figur 2 zeigt, befinden sich Fangleine 22 und Straffleine 24 bei inaktivierter Schutzvorrichtung 16 hinter der Verkleidung von A- und B-Säule 12 und 14.

Im Falle eines Aufpralls von der Seite oder schräg von Vorne wird der Gasgenerator 20 aktiviert und der Seitenairbag aufgeblasen, wobei sich dieser beim Entfalten in vertikaler Richtung nach unten bewegt. Dabei wird er in der Füllendphase durch die Fangleine 22 und die Straffleine 24 zugleich an beiden Stirnenden gehalten, in Längsrichtung gestrafft und dadurch an die abzudeckende Fensterpartie angelegt.

Das Straffen des so zustandekommenden Aufprallschutzes wird folgendermaßen erreicht: Beim Entfalten des Seitenairbag 18 erfolgt eine Relativbewegung des Befestigungspunktes 32 der Straffleine 24 und des Umlenkgliedes 34 zu deren säulenseitigem Befestigungspunkt 30 sowie zum dachholmseitigen, stationären oberen Umlenkglied 36, mit der Folge, dass die Straffleine 24 über das obere Umlenkglied 36 gezogen wird. Das zwischen dem säulenseitigen Befestigungspunkt 30 sowie dem oberen Umlenkglied 36 vorhandene und um das airbagfeste Umlenkglied 34 herumgeführte Teilstück 24' der Straffleine 24 hat dabei das Bestreben, sich zu strecken, woran es jedoch durch das Umlenkglied 34 gehindert ist. Infolgedessen wird durch dieses Straffleinenteilstück 24' auf das Umlenkglied 34 eine resultierende Kraft übertragen, die versucht, dasselbe radial schräg nach oben in Richtung auf die B-Säule 14 zu verlagern. Dabei kommt aufgrund der durch die Fangleine 22 erzeugten Reaktionskraft das erwünschte Straffen des Airbags 18 zustande.

## Patentansprüche

1. Schutzvorrichtung (16) für den Kopf- und Schulterbereich von Fahrzeuginsassen im Falle eine Seiten- oder Schrägaufpralls, mit einem durch einen Gasgenerator (20) aufblasbaren Seitenairbag (18), der in zusammengefaltetem Zustand im seitlichen Dachkantenbereich (10) einer Fahrzeugkarosserie verstaut ist, in aufgeblasenem Zustand einen kissenförmigen, seitlichen Aufprallschutz bildet und mit seinem, in Fahrtrichtung gesehen, vorderen und hinteren Airbagteil in dessen unterem Randbereich (18') über Verbindungselemente (22, 24) an jeweils einer Säule (12) bzw. (14) der Fahrgastzelle verankert ist, **dadurch gekennzeichnet, dass** zumindest eines der Verbindungselemente (24) flexibel und über ein erstes im seitlichen Dachkantenbereich (10) vorgesehenes, stationäres Umlenkglied (36) sowie um mindestens ein am Seitenairbag (18) in dessen unterem Randbereich (18') vorgesehenes zweites Umlenkglied (34) herumgeführt ist, das zwischen den beiden Befestigungspunkten (30, 32) des Verbindungselementes (24) liegt.

2. Schutzvorrichtung nach Anspruch 1, **dadurch gekennzeichnet, dass** bei aufgeblasenem Seitenairbag (18) die airbag- und säulenseitigen Befestigungspunkte (30, 32) das Verbindungselement (24) sowie dessen airbagseitiges Umlenkglied (34) im Wesentlichen in einer gemeinsamen Horizontalebene liegen.

3. Schutzvorrichtung nach Anspruch 1, **dadurch gekennzeichnet, dass** das im Dachkantenbereich (10) vorgesehene, stationäre Umlenkglied (36) ungefähr in der Mitte zwischen dem airbagseitigen Befestigungspunkt (32) und dem airbagseitigen Umlenkglied (34) des Verbindungselementes (24) angeordnet ist.

4. Schutzvorrichtung nach Anspruch 1, **dadurch gekennzeichnet, dass** der Seitenairbag (18) sich wenigstens zwischen zwei Säulen (12 und 14) der Fahrgastzelle erstreckt und dass das über das obere, stationäre Umlenkglied (36) geführte Verbindungselement an der hinteren der beiden Säulen (12, 14) gehalten ist.

5. Schutzvorrichtung nach Anspruch 4, **dadurch gekennzeichnet, dass** durch den Seitenairbag (18) zumindest die zwischen der A-Säule (12) und der B-Säule (14) vorhandene Seitenscheibe der Fahrgastzelle sowie wenigstens bereichsweise die A-Säule (12) abdeckbar ist.

## Claims

1. Device (16) for protecting the head and shoulder region of vehicle passengers in the event of a side impact or an oblique impact, having a side air bag (18) inflatable by a gas generator (20), which in the folded state is stowed in the side roof edge region (10) of a vehicle body and in the inflated state forms a cushion-shaped lateral impact protection, and is anchored in its bottom peripheral region (18') by its front and rear air bag part, as viewed in the direction of travel, respectively to a pillar (12) and (14) of the passenger compartment by means of connecting elements (22, 24), **characterised in that** at least one of the connecting elements (24) is flexible and is fed around a first, stationary deflector element (36) provided in the lateral roof edge region (10) and round at least a second deflector element (34) which is provided on the bottom peripheral region (18') of the air bag (18) and lies between the two attachment points (30, 32) of the connecting element (24).

2. Protective device as claimed in claim 1, **characterised in that** when the side air bag (18) is inflated, the air bag-side and pillar-side attachment points (30, 32), the connecting element (24) and its air-bag side deflector element (34) essentially lie in a common horizontal plane.

3. Protective device as claimed claim 1, **characterised in that** the stationary deflector element (36) provided in the roof edge region (10) is disposed approximately in the middle between the air bag-side attachment point (32) and the air bag-side deflector element (34) of the connecting element (24).

4. Protective device as claimed in claim 1, **characterised in that** the side air bag (18) extends at least between two pillars (12 and 14) of the passenger compartment and the connecting element fed round the top stationary deflector element (36) is retained on the rearmost of the two pillars (12, 14).

5. Protective device as claimed in claim 4, **characterised in that** at least the side window of the passenger compartment between the A pillar (12) and the B pillar (14) and at least certain regions of the A pillar (12) can be covered by the air bag (18).

## Revendications

1. Dispositif de protection (16) pour la zone de tête et d'épaule de passager d'un véhicule dans le cas d'un choc latéral ou oblique, avec un sac gonflable latéral (18) pouvant être gonflé par un générateur de gaz (20), qui, à l'état comprimé par repli, est dissimulé dans la zone d'arête de toit (10) latérale d'une carrosserie de véhicule, qui, à l'état gonflé, forme une protection latérale en forme de coussin contre les chocs, et est ancrée par sa partie de sac gonflable avant et arrière, si on observe dans la direction du véhicule, dans sa zone de bordure (18') inférieure par des éléments de liaison (22, 24) chaque fois sur une colonne (12) ou (14) de la cellule à passager, **caractérisé en ce qu'**au moins l'un des éléments de liaison (24) est flexible et passé sur un premier organe de renvoi (36) stationnaire, prévu dans la zone d'arête de toit (10) latérale, ainsi qu'autour d'au moins un deuxième organe de renvoi (34) prévu sur le sac gonflable latéral (18), dans sa zone de bordure inférieure (18'), le deuxième organe de renvoi étant placé entre les deux points de fixation (30, 32) de l'élément de liaison (24).

2. Dispositif de protection selon la revendication 1, **caractérisé en ce que**, lorsque le sac gonflable latéral (18) est gonflé, les points de fixation (30, 32), situés côté sac gonflable et côté colonne, placent l'élément de liaison (24), ainsi que son organe de renvoi (34) situé côté sac gonflable, pratiquement dans un plan horizontal commun.

3. Dispositif de protection selon la revendication 1, **caractérisé en ce que** l'organe de renvoi (36) stationnaire prévu dans la zone d'arête de toit (10) est disposé à peu prés au centre, entre le point de fixation (32), situé côté sac gonflable, et l'organe de renvoi (34) situé, côté sac gonflable, de l'élément de liaison (24).

4. Dispositif de protection selon la revendication 1, **caractérisé en ce que** le sac gonflable latéral (18) s'étend au moins entre deux colonnes (12 et 14) de la cellule à passager, et **en ce que** l'élément de liaison, guidé sur l'organe de renvoi supérieur (36) stationnaire, est maintenu sur celle des deux colonnes (12, 14) se trouvant à l'arrière.

5. Dispositif de protection selon la revendication 4, **caractérisé en ce que**, au moyen du sac gonflable latéral (18), au moins la vitre latérale, placée entre la colonne A (12) et la colonne B (14) de la cellule à passager, ainsi que, au moins par zones, la colonne A (12) sont couvertes.
